# EUROPEAN PATENT APPLICATION

(11) **EP 2 423 879 A1**
(43) Date of publication of application: **29.02.2012**
(21) Application number: 11177589.6
(22) Date of filing: 15.08.2011
(51) Int. Cl.: G06T 7/20

(54) **Method for clustering multi-modal data that contain hard and soft cross-mode constraints**

(30) Priority: 24.08.2010 US 862289
(71) Applicant: Honeywell International, Inc., Morristown, New Jersey 07962-2245 (US)
(72) Inventor: Schloegel, Kirk A., Morristown, NJ New Jersey 07962-2245 (US); Guralnik, Valerie, Morristown, NJ New Jersey 07962-2245 (US)
(74) Representative: Buckley, Guy Julian

(57) **Abstract**

A program product for clustering multi-modal data including hard and soft cross-mode constraints is provided. The program-product includes a non-transitory processor-readable medium on which program instructions are embodied. The program instructions are operable, when executed by at least one processor, to: color nodes in a graph having a plurality of objective edges and a plurality of constraint edges; partition the nodes by color; map the partitions back to the graph to form a color-partitioned graph having at least two sub-domains; and cross-associate all data that are part of a cluster. At least two colors are used to color the nodes. The plurality of constraint edges connects a respective plurality of node pairs, the two nodes in the node pairs being different colors. The partitioned nodes of the same color are independent of constraint edges.

## Description

### BACKGROUND

Data mining techniques, such as clustering, have been successfully applied to homogeneous data sets to automatically discover underlying structure, patterns, or other types of features in the data. However, these methods work well only for mining data in which data items are related by only a single (possibly weighted) positive type of relationship and in which the clustering is limited by a single type of constraint (e.g., a cluster-size constraint). Multiple-modal data sets can be highly heterogeneous in nature. This heterogeneity can manifest as a plurality of both positive and negative relationship types and a plurality of constraint types.

### SUMMARY

The present application relates to a program product for clustering multi-modal data including hard and soft cross-mode constraints. The program-product includes a non-transitory processor-readable medium on which program instructions are embodied. The program instructions are operable, when executed by at least one processor, to color nodes in a graph having a plurality of objective edges and a plurality of constraint edges. At least two colors are used to color the nodes. The plurality of constraint edges connects a respective plurality of node pairs, the two nodes in the node pairs being different colors. The program instructions are also operable, when executed by the at least one processor, to partition the nodes by color. The partitioned nodes of the same color are independent of constraint edges. The program instructions are also operable, when executed by the at least one processor, to map the partitions back to the graph to form a color-partitioned graph having at least two sub-domains, and to cross-associate all data that are part of a cluster.
Figures 1A, 1B, and 1C show an embodiment of a tracking system at three sequential points in time, respectively, in accordance with the present invention;
Figure 2A is an embodiment of a temporal-constraint diagram that specifies temporal constraints across cameras of Figures 1A-1C;
Figure 2B is a table of feasible and infeasible cross-camera track moves, which result from the temporal-constraint diagram of Figure 2A;
Figure 3 is an embodiment of a graph including a plurality of objective edges and a plurality of constraint edges in accordance with the present invention;
Figure 4 shows the graph of Figure 3 in which the plurality of objective edges are removed;
Figures 5-7 are three color segments of the graph of Figure 4, respectively;
Figure 8 is a color-partitioned graph including the sub-graphs of Figures 4-6;
Figure 9 is an embodiment of an optimized color-partitioned graph based on the color-partitioned graph of Figure 8; and
Figure 10 is a flow diagram of an embodiment of a method to extend the lifespan of a track of a moving object to overcome spatial non-locality and temporal non-locality in accordance with the present invention.

In accordance with common practice, the various described features are not drawn to scale but are drawn to emphasize features relevant to the present invention. Like reference characters denote like elements throughout figures and text.

### DETAILED DESCRIPTION

The algorithms described herein provide a framework to model multiple types of positive and negative relationships between data (image and social), to model a number of important classes of clustering constraints, and to cluster the data modeled under this framework to enhance the length of tracks of tracked objects. Specifically, the algorithms described herein model multi-modal data, which contains hard and soft cross-mode constraints, as a multi-objective, multi-constraint graph. A multi-objective, multi-constraint graph is one in which each edge and node has an associated vector of weights. Nodes are data base entries (entities) and edges are relationships between the entries. An objective is a metric that may be optimized with respect to a particular function. A constraint is a condition that must be satisfied for the solution to be valid. Each element in a vector of edge weights represents a positive or negative relationship. Each element in the vector of node weights represents a clustering property or constraint.

A possible node-based constraint is a minimum or maximum on either the number of nodes or the total weight of the nodes that form a cluster. Another possible node-based constraint is that the number of nodes or total weight of the nodes must be balanced (i.e., or roughly equal) across all clusters. When nodes represent tracks, the methods described herein may not use any node-based constraints. However, the method described herein may use node-based constraints when applied to other type of data (e.g., social network data, financial data, or multi-modal data).

Herein we define two types of edges. An objective edge indicates a positive or negative correlation between the connected nodes that can be optimized with respect to one or more particular functions. A constraint edge indicates a constraint that limits the space of feasible solutions and that is due to a particular relationship between the connected nodes. Herein, a hard constraint edge indicates the connected nodes cannot be part of the same cluster. Other constraining relationships are also possible. For example, a set of constraint edges could indicate that exactly one of the incident nodes must be part of a particular cluster.

A clustering algorithm is performed on the graph to: perform a coloring of the nodes; partition the nodes by color using a multi-objective partitioning algorithm; map partitions back to the original graph; optimize the mapped partition by iteratively merging or splitting sub-domains or by swapping border nodes, while a) ensuring all constraint edges are cut by the partition, b) minimizing the objective-edge weight cut by the partition and c) ensuring all clustering constraints are satisfied. The resulting partition specifies the set of clusters (also referred to as sub-domains). The partitioning is also referred to herein as a "clustering." A cluster is a grouping of related tracks (with or without a time and/or spatial gap) from video data from one or more cameras. A border node is a node the border two sub-domains,

In one implementation of this embodiment, the coloring is done using a Welsh-Powell algorithm. In another implementation of this embodiment, the coloring is done using a Modified Welsh-Powell algorithm. As is known in the art, the Welsh-Powell algorithm is a greedy algorithm that goes through the nodes in order of the degree of their constraint edges and assigns colors to each node in an attempt to minimize the total number of colors. Herein, we describe a Modified Welsh-Powell algorithm that is based on the Welsh-Powell algorithm, but that goes through the nodes in order based on the total objective-edge weight (i.e., starting with the node that has the highest total objective-edge weight and ending in the node that has the lowest total objective-edge weight). After a node is assigned a color to form a colored node, the Modified Welsh-Powell algorithm attempts to color the nodes that are connected to the colored node by an objective edge with the same color as the colored node. This is done in order of total objective-edge weight (i.e., starting with the node that is connected to the colored node by the objective edge with the highest edge weight and ending with the node that is connected to the colored node by the objective edge with the lowest edge weight.)

In general, a node can be part of zero or more clusters of a clustering. Herein, the number of clusters a track can be part of is constrained to zero or one. This constraint is based on the assumption that a track cannot be associated with more than one person. However, for other types of data (e.g., social network data or financial data), this constraint may not apply. For example, a single financial account may be associated with multiple people.

The methods and algorithms described herein operate on data received from one or more cameras used to track a moving object. Algorithms are used to detect the object in a single frame of video data from a camera. Trackers are algorithms are used to track corresponding objects across sequentially obtained frames of video data from one or more cameras. The tracked object is a person or other moving object and the term "object" is used interchangeably herein with the terms "moving object," "person," and "people." A "track" is a time sequence of bounding boxes within non-simultaneously obtained images. A "bounding box" bounds a specific region of interest in the image on the camera, such as a face or body of a person of interest being tracked. Tracking of a person is relatively simple when: there is spatial and temporal locality; the cameras have high resolution; and the tracked person is visible within the uninterrupted subsequently obtained images.

Tracking becomes more difficult when there is obstruction of the tracked person, when there is spatial non-locality of the tracked person, and/or when there is temporal non-locality of the tracked person. In tracking, spatial non-locality tracks a person, who leaves the field-of-view of one camera and enters the field-of-view of another camera, by knitting together the relevant tracks from the two cameras. In tracking, temporal non-locality tracks the person, who leaves the field-of-view of one camera and enters the field-of-view of the same camera field at a later time, by knitting together the relevant tracks connected with the time gap. When cameras have low resolution or when a person is obscured or eclipsed by other objects or people, the tracked person can be lost. If the tracked person is later found, the track continues as a temporal non-locality track (and possibly also a spatial non-locality track) having a gap in time. As defined herein, the lifespan of the track is proportional to the number of sequentially obtained nodes that are highly-correlated to each other and which are thus clustered in a track. The lifetime of a track is extended by increasing the number of sequentially obtained nodes that are highly-correlated to each other in a cluster.

It is useful to extend the lifespan of the track by increasing the length of a track in order to find social events that occur in the camera. A social event can include two people walking toward each other and shaking hands, people walking toward each other and then walking in the same direction with each other, or people walking toward each other and then turning around and walking in opposite directions.

Similarity matching is done on the tracks using similarity scores. The tracks that are most similar are rank ordered. Similarity matching presents difficulties in cases when there are too many similar visual cues of the objects in the field-of-view of the camera (e.g., 10 of 14 people in the field-of-view of the camera have similar long dark coats) or when the camera has low resolution. It is possible to build a graph in which each track is a node and there is a weighted edge between two nodes. In some embodiments, the edge connecting two nodes has a vector of weights. A first value of the vector is the similarity score and the second value is based on how likely or unlikely the connected nodes are to represent the same person based on the physical and temporal properties. A multi-objective graph partitioning algorithm is used to generate clusters of nodes that are likely to be related tracks of the same objects. The multi-objective graph partitioning algorithm takes into account all of the different edge weights for the edges connecting the nodes when generating the clusters. If there is a high similarity score and a high physical-temporal value (based on temporal and/or spatial properties), it is likely that the two nodes are representative of the same object. If only one of these scores is high, the partitioning is based on the relative importance of each metric type. This concept is disclosed in the patent application having United States Patent Applications Serial No. 12/829,725 with a title of "SYSTEM FOR INFORMATION DISCOVERY IN VIDEO-BASED DATA", which was filed on July 2, 2010, and which is incorporated herein by reference in its entirety.

The methods and algorithms described herein allow a user to increase the extent of a track of a moving object/person. The data items for the tracked objects are related by multiple types of positive relationships and by multiple types of negative relationships. These multiple types of positive and negative relationships are used to generate (compute) multi-nodal clusterings (clusters) based on the tracks. In the case of positive types of relationships, the generated clusters encompass the nodes that are interconnected by edges that have high edge weights, while excluding nodes that are connected to the cluster nodes by edges that have low or zero edge weights. In other words, for positive types of relationships, clusters of nodes are computed with high edge weights to the other nodes within the cluster and with low or zero edge weights to nodes outside of the cluster. In the case of negative types of relationships, the generated clusters encompass the nodes that are interconnected by edges that have low or zero edge weights, while excluding nodes that are connected to the cluster nodes by edges that have high edge weights. In other words, for negative types of relationships, clusters of nodes are computed with zero or low edge weights to the other nodes within the cluster and with high edge weights to nodes outside of the cluster.

In the approach described herein, there at least two types of edges. The objective edge positively or negatively associates tracks with respect to an objective function. The constraint edges apply constraints that a feasible clustering must satisfy. The constraint edge can be a hard constraint or a soft constraint, in which the hardness/ softness may be based on a weighting factor. A hard constraint may indicate that there is zero likelihood that the associated nodes or tracks are the same. In this case, a feasible clustering will never result in two or more nodes within the same cluster that have a hard constraint edge between them. The framework described herein models the multiple types of positive and negative relationships between the data as well as a number of important classes of clustering constraints. Some of the important classes of clustering constraints that can be modeled include size constraints, similarity constraints, cluster-size limitations, the number of clusters a node can be part of, spatial or temporal constraints, and kinetic constraints.

The algorithms for clustering in the presence of positive and negative relationships and hard and soft constraints include a combination of graph coloring (for constraints) and partitioning (for objectives). A copy of the graph is created with objective edges only (no constraint edges). For any two nodes connected by both a constraint edge and an objective-edge on the original graph, the objective edges between the two nodes are removed on the copy graph. All disconnected subgraphs (sub-domains) are then computed on the copy graph. Since these subgraphs share no objective edges, and hence, have no cross-domain similarity, disjoint subsets of clusters are computed for each subgraph.

For each subgraph a coloring of the subgraph is computed based solely on the constraint edges (and not on the objective edges). In graph coloring, the nodes are colored using the minimum number of colors with the restriction that nodes joined by a constraint edge cannot be colored with the same color. As is known in the art, greedy coloring is a coloring of the nodes of a graph formed by a greedy algorithm that considers the nodes of the graph in sequence and assigns each node its first available color. Greedy colorings do not necessarily result in the minimum number of colors possible. A greedy coloring approach (a greedy algorithm) such as the Modified Welsh Powell algorithm can be used as described herein.

The colored graph is then partitioned by color. Since no nodes of the same color can share a constraint edge, any partitioning of the nodes of a single color will be guaranteed to satisfy all of the constraint edge constraints. Hence, the partitioning algorithm need not be aware of constraint edges. Nodes of the same color and all objective edges that join them are partitioned using a multi-objective graph partitioning algorithm as is described in the patent application having United States Patent Applications Serial No. 12/829,725 with a title of "SYSTEM FOR INFORMATION DISCOVERY IN VIDEO-BASED DATA", which was filed on July 2, 2010, and which is incorporated herein by reference in its entirety. All the initial partitionings are then mapped together using a fast, greedy algorithm such that a function of the weight of the objective edges that are cut by the full partitioning of the full graph is minimized. All data that are part of the same cluster are cross-associated.

In an alternative method, only one of the colors is partitioned. In this case, the partition is greedily expanded by a taking of the remaining colors in some order and greedily assigning nodes of a remaining color to existing sub-domains, if it is possible to do so, based on the constraint edges. If it is not possible to greedily assign nodes of the remaining colors to all existing sub-domains, a new sub-domain may be created that contains only the nodes that are not assigned to the remaining color. The clustering may then be improved by using a refinement approach to improve the clustering by optimizing the objective function while maintaining the constraints. A greedy or multilevel refinement approach may be used.

A track that is spatially distant but temporally close gives a hard constraint because the tracked object could not be in the second location within the time between the images from which the track is obtained being taken. This is based on a highest velocity possible for the moving object. For example, a person cannot walk or run 0.25 miles between two cameras that show the similar tracked person within 10 seconds. If the first camera having the image of the tracked person at time t₀ is located 0.25 miles from the second camera having the image of the tracked person at time t₀ +Δt where Δt is 10 seconds, then those images have a hard constraint (i.e., they cannot be an image of the same person) since the tracked person cannot have walked 90 miles per hour (i.e., (0.25miles x 3600 seconds/hour)/10 seconds). In this exemplary case, there must be no possibility that the object was in a fast moving vehicle during the 10 seconds of moving between the two cameras.

Likewise, two similar persons, who are simultaneously in the same image, cannot be the same person; therefore those two persons (nodes) are connected by a hard constraint edge. Identical twins may cause the nodes to be similar but those two nodes are connected by a hard constraint if they show up in the same image at the same time. Thus, this keeps the twins from being in the same cluster.

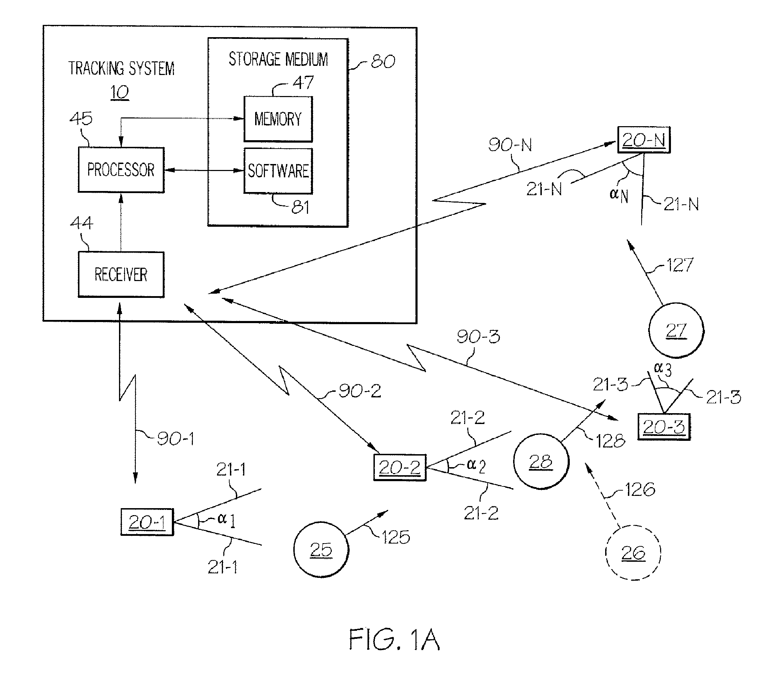

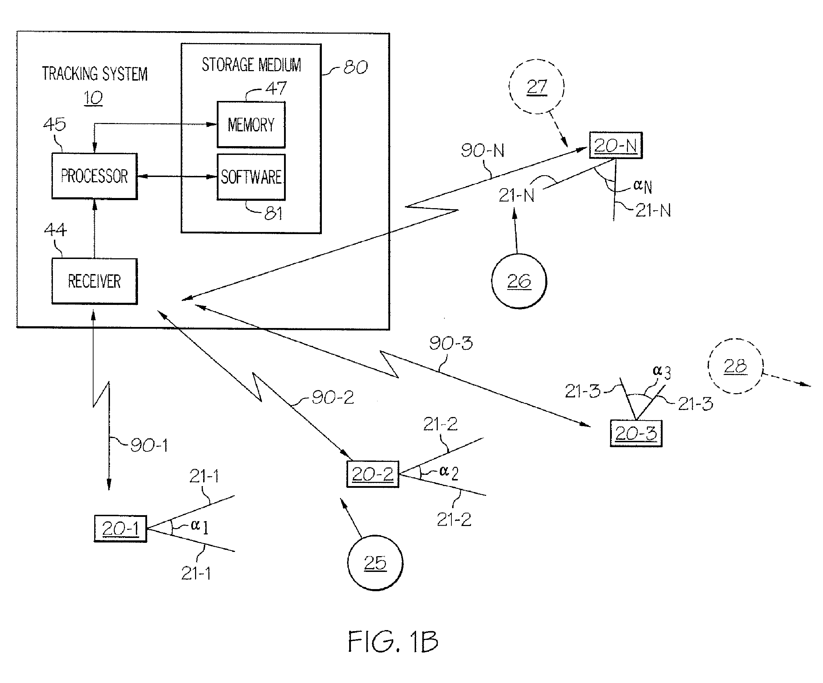

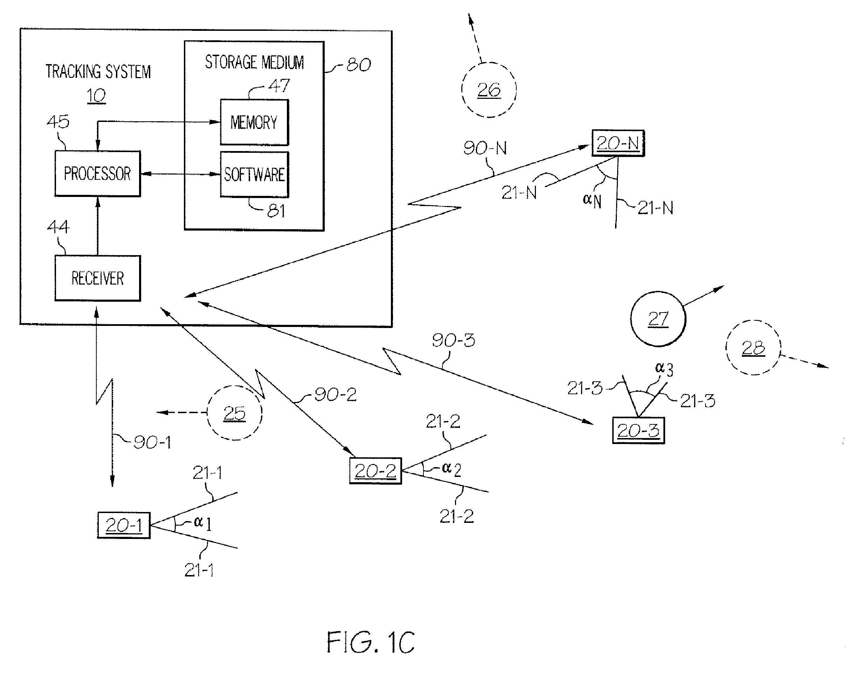

Figures 1A, 1B, and 1C show an embodiment of a tracking system 10 at three sequential points in time, respectively, in accordance with the present invention. The tracking system 10 includes a receiver, at least one processor 45, and storage medium 80. The storage medium 80 includes software 81 (e.g., implemented algorithms 81) and a memory 47.

The software 81 is executed by one of the at least one processor 45. The receiver 44 in the tracking system 10 is communicatively coupled to receive image data from a plurality of cameras 20(1-N) via communication links 90(1-N), respectively.

In one implementation of this embodiment, the communication links 90(1-N) are wireless communication links. In another implementation of this embodiment, the communication links 90(1-N) are wired links, such as radio frequency cables, copper wires, and/or optical fiber links. In yet another implementation of this embodiment, the cameras 20(1-N) include a processor to pre-process the image data that is transmitted to the receiver 44.

The receiver 44 is communicatively coupled to send image data to the processor 45. The processor 45 is communicatively coupled to receive input from the memory 47 and to send input to the memory 47. The processor 45 executes software 81 and/or firmware that causes the processor 45 to perform at least some of the processing described here as being performed by the tracking system 10. In one implementation of this embodiment, a processor external to the tracking system 10 receives data from the cameras 20(1-N) and that processor bounds the images of the tracked object and sends the processed data to the receiver 44 in the tracking system 10. In another implementation, the processor 45 receives image data and then immediately stores it in memory 47 for later offline processing. In yet another implementation, the image data is stored in a memory in the cameras 20(1-N) and downloaded at a later time for offline processing by the processor 45. In this latter embodiment, the receiver 44 is not required in the tracking system 10.

At least a portion of such software 81 and/or firmware executed by the processor 45 and any related data structures are stored in storage medium 80 during execution of the software 81. Memory 47 includes any suitable memory now known or later developed such as, for example, random access memory (RAM), read only memory (ROM), and/or registers within the processor 45. In one implementation of this embodiment, the memory 47 is external to the storage medium 80. In one implementation, the processor 45 includes a microprocessor, processor, or microcontroller. Moreover, although the processor 45 and memory 47 are shown as separate elements in Figures 1A-1C, in one implementation, the processor 45 and memory 47 are implemented in a single device (for example, a single integrated-circuit device). The software 81 and/or firmware executed by the processor 45 includes a plurality of program instructions that are stored or otherwise embodied on a storage medium 80 from which at least a portion of such program instructions are read for execution by the processor 45. Specifically, the storage medium 80 stores program product for clustering multi-modal data including hard and soft cross-mode constraints. The program-product includes a non-transitory processor-readable medium on which program instructions are embodied. In one implementation, the processor 45 includes processor support chips and/or system support chips such as application-specific integrated circuits (ASICs).

The cameras 20(1-N) have a field-of-view the extent of which is indicated by arrows 21(1-N), respectively, that subtend angles α(1―N), respectively. Figure 1A shows an embodiment of the tracking system 10 at a first point in time t₁. As shown in Figure 1A, an object 25 is within the field-of-view of the camera 20-1, an object 28 is within the field-of-view of the camera 20-2, and an object 27 is within the field-of-view of camera 20-3. The object 26 is not in the field-of-view of any camera. Objects which are not in the field-of-view of any camera 20(1-N) are indicated in dashed lines. The objects 25, 26, 27, and 28 are each moving in a direction indicated by a respective arrow, 125, 126, 127, and 128.

Figure 1B shows an embodiment of the tracking system 10 at a second point in time t₂ = t₁ + Δt. At time t₂, object 25 has moved within the field-of-view of camera 20-1. At time t₂, object 26 has moved into the field-of-view of camera 20-N. At time t₂, object 28 has moved out of the field-of-view of camera 20-2. At time t₂, object 27 has moved out of the field-of-view of camera 20-2 and is not in the field-of-view of any camera 24(1-N).

Figure 1C shows an embodiment of the tracking system 10 at a third point in time t₃ = t₁ + 2Δt = t₂ + Δt. At time t₃, objects 25 and 26 have moved from the field-of-views of cameras 20-1 and 20-N, respectively, and are not in the field-of-view of any camera 20(1-N). At time t₃, object 28 is still outside the field-of-view of all cameras 20(1-N). At time t₃, object 27 has moved into the field-of-view of camera 20-3.

Thus, if exemplary object 27 is being tracked by tracking system 10, the track of object 27 in camera 20-3 at time t₁ and the track of object 27 in camera 20-3 at time t₃ are bounded by the processor 45 to form a node for each of the times t₁ and t₃. It is possible that the processor 45 includes some other tracks from the field-of-view of the cameras 20(1-N), which are not tracks of object 27, but which represent other objects that are similar in some way (e.g., visually, kinetically, similar mass, etc.) to object 27. Those similar tracks may also be incorporated in the original multi-objective, multi-constraint graph. The method of tracking may take into account both similarities amongst tracks as well as constraints to prevent tracks of different objects, which are similar with respect to one or more particular relationships but which represent different objects, from being grouped in the same cluster.

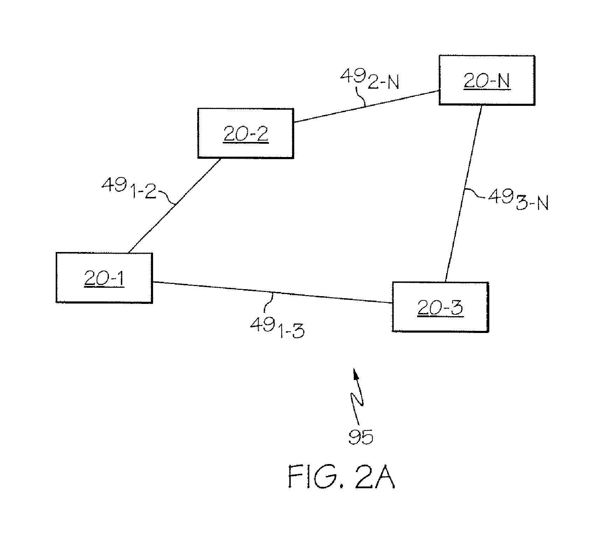

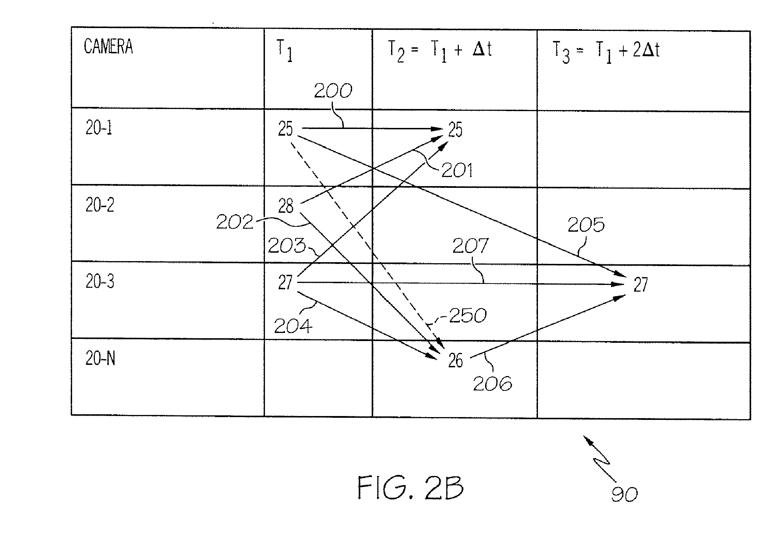

The method to extend the lifespan of a track of a moving object by overcoming spatial non-locality and temporal non-locality is now described with reference to Figures 2A-9. Figure 2A is an embodiment of a temporal-constraint diagram 95 that specifies temporal constraints across cameras of Figures 1A-1C. Figure 2B is a table of feasible and infeasible cross-camera track moves, which result from the temporal-constraint diagram of Figure 2A. The temporal-constraint diagram 95 includes objective edges, which indicate that tracks in the field of view of camera 20-1 can reach the field of view of camera 20-2 (objective edge 49₁₋₂) and camera 20-3 (objective edge 49₁₋₃) within a time change Δt. The temporal-constraint diagram 95 indicates that tracks in the field of view of camera 20-2 can reach the field of view of camera 20-1 (objective edge 49₁₋₂) and camera 20-N (objective edge 49_{2-N}) within the time change Δt. The temporal-constraint diagram 95 indicates that tracks in the field of view of camera 20-3 can reach the field of view of camera 20-1 (objective edge 49₁₋₃) and camera 20-N (objective edge 49_{3-N}) within the time change Δt. The temporal-constraint diagram 95 indicates that tracks in the field of view of camera 20-N can reach the field of view of camera 20-2 (objective edge 49_{2-N}) and camera 20-3 (objective edge 49_{3-N}) within the time change Δt.

Table 90 indicates it is feasible for track 27 in column t₁ to represent the same object as tracks 25 and 26 in column t₂ (see arrows 203 and 204, respectively). Table 90 indicates it is feasible for track 28 in column t₁ to represent the same object as tracks 25 and 26 in column t₂ (see arrows 201 and 202, respectively). Table 90 indicates it is feasible for track 25 in column t₁ to represent the same object as track as 25 in column t₂ (see arrow 200), but not track 26 (see dashed arrow 250). Table 90 indicates it is feasible for track 25 in column t₁ to represent the same object as track as 27 in column t₃ (see arrow 205). Table 90 indicates it is feasible for track 26 in column t₂ to represent the same object as track as 27 in column t₃ (see arrow 206). Table 90 indicates it is feasible for track 27 in column t₁ to represent the same object as track as 27 in column t₃ (see arrow 207). Furthermore, no tracks that are visible during the same time frame can represent the same object. In this manner, time-based objective edges (indicated by arrows 200-207) and constraint edges (indicated by arrow 250) are generated. In one implementation of this embodiment, table 90 is automatically generated by a rules-based approach as is known in the art.

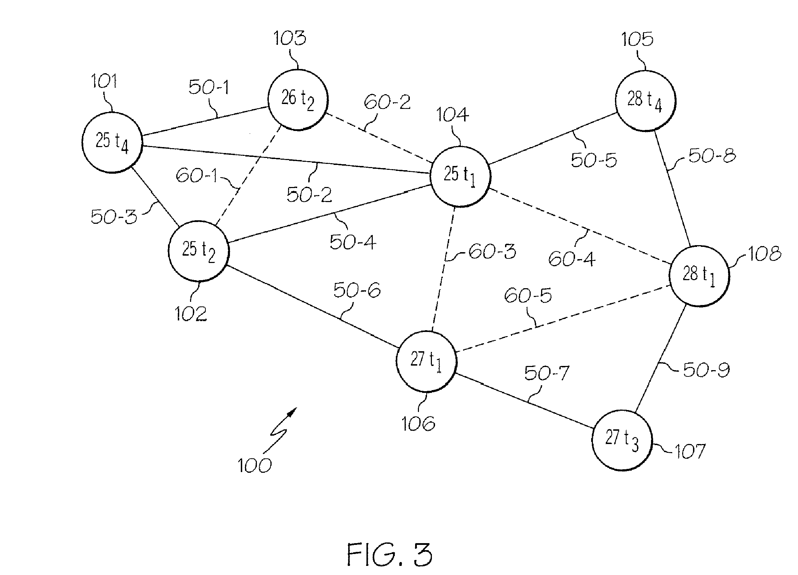

Figure 3 is an embodiment of a graph 100 including a plurality of objective edges 50(1-9) and a plurality of constraint edges 60(1-5) in accordance with the present invention. The exemplary graph 100 includes exemplary nodes 101-108. Node 101 represents a track of object 25 captured at some later time after t₃. Node 102 represents the track detected for object 25 at t₂ in Figure 1B. Node 103 represents the track detected for object 26 at t₂ in Figure 1B. Node 104 represents track detected for object 25 at t₁ in Figure 1A. Node 105 represents a track detected for object 28 at some later time after t₃. Node 106 represents the track detected for object 27 at t₁ in Figure 1A. Node 107 represents the track detected for object 27 at t₃ in Figure 1C. Node 108 represents the track detected for object 28 at t₁ in Figure 1A.

Node 101 is connected to node 103 by objective edge 50-1. Node 101 is connected to node 104 by objective edge 50-2. Node 101 is connected to node 102 by an objective edge 50-3. Node 102 is connected to node 104 by objective edge 50-4. Node 104 is connected to node 105 by objective edge 50-5. Node 102 is connected to node 106 by objective edge 50-6. Node 106 is connected to node 107 by objective edge 50-7. Node 105 is connected to node 108 by objective edge 50-8. Node 108 is connected to node 107 by objective edge 50-9.

The processor 45 generates the constraint edges for the nodes in the graph based on at least one of: temporal overlap within a camera; temporal overlap across cameras having non-overlapping field-of-views; temporal locality constraints; temporal constraints on dynamic tracks; spatial constraints; constraints derived from social network data; constraints derived from financial data; and constraints derived from other modes of data. As defined herein, a dynamic track is a track that has moved within a field-of-view of a camera or that has moved from the field-of-view of a first camera to the field-of-view of a second camera.

Node 102 is connected to node 103 by constraint edge 60-1. Node 103 is connected to node 104 by constraint edge 60-2. Node 104 is connected to node 106 by constraint edge 60-3. Node 104 is connected to node 108 by constraint edge 60-4. Node 106 is connected to node 108 by constraint edge 60-5. Constraint edge 60-1 is due to the temporal constraint that exists between the associated tracks of the incident nodes. They both are detected during t₂. Constraint edges 60-3, 60-4, and 60-5 are due to temporal constraint that exists between the associated tracks of the incident nodes. They all are detected during t₁. Constraint edge 60-2 is due to temporal constraint that exists between the associated tracks of the incident nodes. It is not possible for object 25 to get from the field of view of 20-1 at t₁ to the field of view of camera 20-N at t₂ as indicated by dashed arrow 250 in Figure 2B.

Thus, graph 100 is a set of nodes related by of multi-objective, multi-constraint edges that can be used to cluster similar and non-constrained nodes. If the processor 45 determines that two nodes in the graph 100 are connected by at least one objective edge and by at least one constraint edge, the processor 45 resolves this conflict by some method (e.g., prefer objectives over constraints, prefer constraints over objectives, perform a weighted compare, or threshold approach). In this manner, no two nodes are simultaneously connected by an objective edge and a constraint edge.

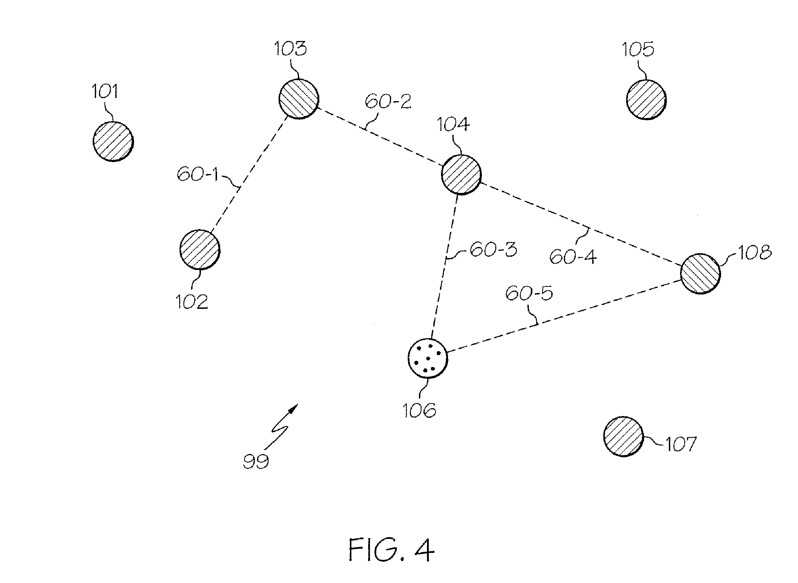

Figure 4 shows the graph 100 of Figure 3 in which the plurality of objective edges 50(1-9) are removed. The objective edges 50(1-9) in graph 100 of Figure 3 are removed leaving constraint-edge graph 99 with only the constraint edges 60(1-5) between the nodes 101, 102, 103, 106, and 108. Next, the nodes 101-108 are colored. At least two colors are used to color the nodes 101-108, and the coloring is computed such that constraint edges only connect nodes of different colors. For example, the plurality of constraint edges 60(1-5) connect a respective plurality of node pairs 102/103, 103/104, 104/106,104/108, and 106/108, respectively, in which the two nodes in the node pairs 102/103, 103/104, 104/106, 104/108, and 106/108 are different colors.

As shown in Figure 4, nodes 101, 102, 104, 105, and 107 are colored with a first color indicated by a first cross-hatch pattern. Likewise, nodes 103 and 108 are colored with a second color indicated by a second cross-hatch pattern. Node 106 is colored with a third color indicated by a third cross-hatch pattern. In one implementation of this embodiment, the coloring of the constraint edges is done using a Modified Welsh-Powell algorithm. Other coloring algorithms are possible.

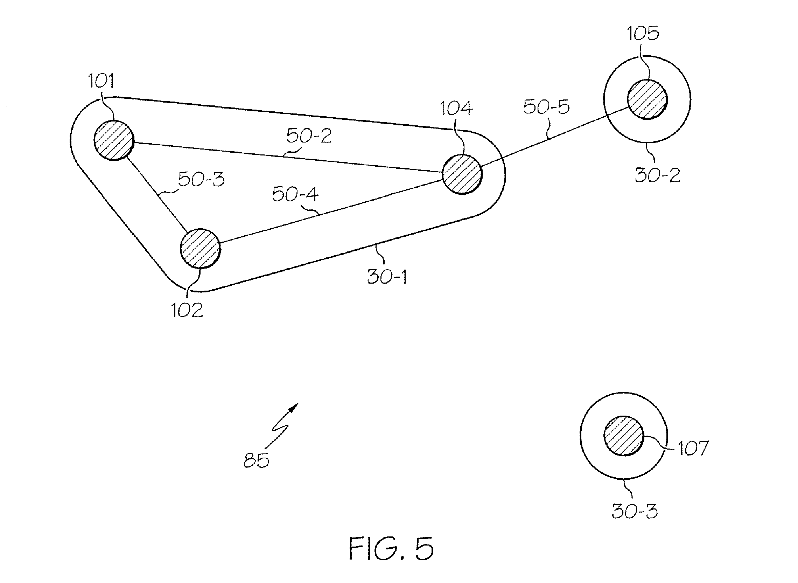

Figures 5-7 are three color segments of the graph of Figure 4, respectively. Figures 5-7 show the nodes of a single color in respective sub-graphs 85, 86, and 87. The combined sub-graphs 85, 86, and 87 together form the colored constraint-edge graph 99 (Figure 4). The nodes of each color in sub-graphs 85, 86, and 87 along with all of the objective edges from graph 100 that connect the colored nodes are partitioned. Because each color is partitioned in isolation of all other colors, the partitioned nodes 101-108 shown of the same color in the exemplary sub-graphs 85, 86, and 87 are independent of constraint edges and are only connected by objective edges.

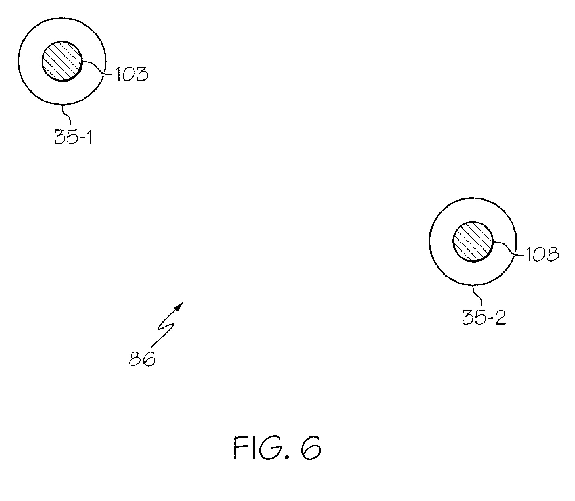

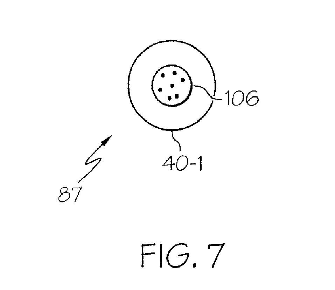

As shown in Figure 5, the nodes 101, 102, 104, 105, and 107, which are colored by the first color, are partitioned in sub-graph 85 as follows: nodes 101, 102, and 104 are partitioned into a sub-domain 30-1; node 105 is partitioned into sub-domain 30-2; and node 107 is partitioned into sub-domain 30-3. As shown in Figure 6, the nodes 103, and 108, which are colored by the second color, are partitioned in graph 86 as follows: node 103 is partitioned into sub-domain 35-1; and node 108 is partitioned in graph 86 into sub-domain 35-2. As shown in Figure 7, the node 106, which is colored by the third color, is partitioned in sub-graph 87 into sub-domain 40-1.

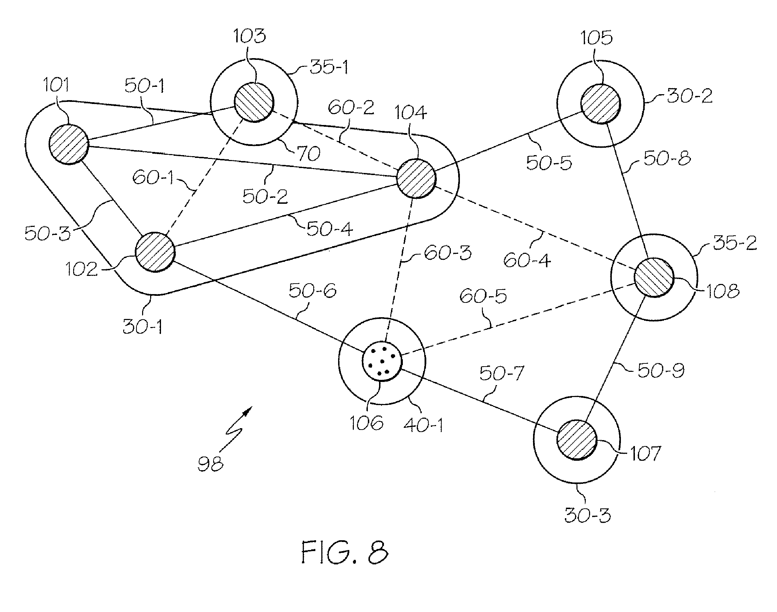

Figure 8 is a color-partitioned graph 98 including the sub-graphs 85, 86, and 87 of Figures 5-7. The color-partitioned graph 98 has at least two sub-domains. As shown in Figure 8, the partitions (sub-domains) 30-1, 30-2, 30-3, 35-1, 35-2, and 40-1 in sub-graphs 85, 86, and 87 are mapped back to the graph 100 to form the color-partitioned graph 98. The objective edges and the constraint edges are all shown in the color-partitioned graph 98.

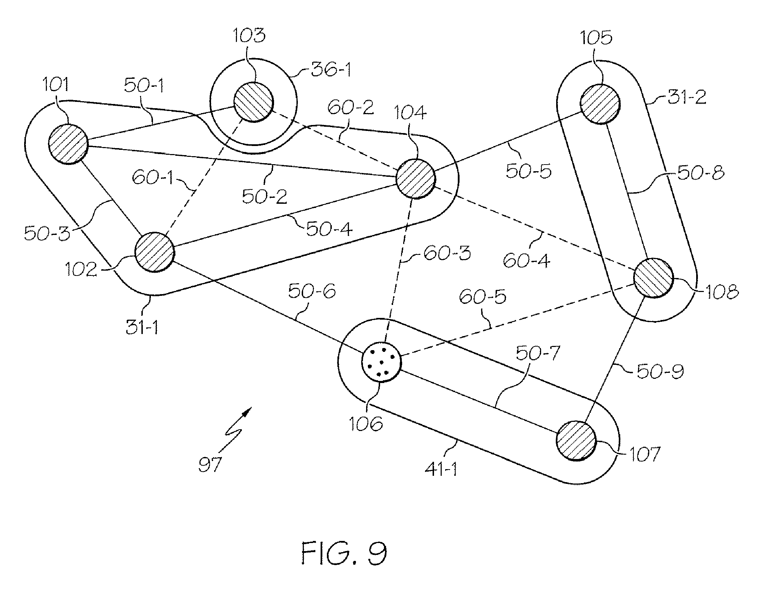

Figure 9 is an embodiment of an optimized color-partitioned graph 97 based on the color-partitioned graph of Figure 8. The processor 45 optimizes the graph 98 (Figure 8) to form optimized graph 97 by minimizing the number of objective edges cut by the sub-domains 30-1, 30-2, 30-3, 35-1, 35-2, and 40-1 (Figure 8). The objective edge 50-1 is cut by the optimized sub-domains 31-1 and 36-1. The objective edge 50-6 is cut by the optimized sub-domains 31-1 and 41-1. The objective edge 50-5 is cut by the optimized sub-domains 31-1 and 31-2. The objective edge 50-9 is cut by the optimized sub-domains 31-2 and 41-1.

In one implementation of this embodiment, the processor 45 provides objective-edge weights for respective associated objective edges 50(1-9), and minimizes a function of the objective-edge weights cut by the sub-domains 30-1, 30-2, 30-3, 35-1, 35-2, and 40-1 (Figure 8). A weighted sum can be used for this function. Others are possible.

The optimization occurs by an optimization function (software) that performs at least one of the following functions: swapping border nodes; merging at least two sub-domains; and splitting at least one sub-domain, while ensuring that all constraint edges are cut by the partitioning. Node 103, which was shown within sub-domain 35-1 bordering on the sub-domain 30-1 (Figure 8), would have been swapped into the sub-domain 30-1 if there were no constraint edges between node 103 and the nodes 101, 102, and 104. Since there are two constraint edges 60-1 and 60-2 between the sub-domains 31-1 and 35-1 (Figure 8), the sub-domain 35-1 is separated from the sub-domain 31-1 as sub-domain 36-1 in the optimized color-partitioned graph 97 of Figure 9.

As shown in Figure 9, nodes 106 and 107 in sub-domains 40-1 and 30-3 (Figure 8), respectively, are merged to form the optimized sub-domain 41-1. The merging of sub-domains 40-1 and 30-3 cuts the constraint edges 60-3 and 60-5 and removes the cut of objective edge 50-7. Similarly, nodes 105 and 108 in sub-domains 30-2 and 35-2 (Figure 8), respectively, are merged to form the optimized sub-domain 31-2. The nodes 101, 102, and 104 in the optimized sub-domain 31-1 are likely to be tracks for the same object. The nodes 106 and 107 in the optimized sub-domain 41-1 are not the same color but are likely to be tracks for the same object. Likewise, the nodes 105 and 108 in the optimized sub-domain 31-2 are not the same color but are likely to be tracks for the same object. The objects tracked in optimized sub-domains 31-1, 31-2, and 41-1 are not the same tracked object, but must be three distinct objects due to constraints. The processor 45 ensures all clustering constraints are satisfied. In this manner, the data received from a plurality of cameras 20(1-N) is optimized.

The metrics that are optimized include similarity rank/score; spatial locality and position within the camera field-of-view; temporal gaps in the cluster; and social network data. The constraints include: temporal overlap (within a single camera and across non-overlapping cameras); temporal locality constraints (similarities are not computed for tracks that are temporally distant); and temporal constraint on dynamic tracks (maximum time limit a dynamic track can be in the camera view).

The method described herein may be used to perform node disambiguation. Node disambiguation is done to remove ambiguity of the underlying real world entity associated with a node in the data base using combined analysis over multiple databases. The data base has a plurality of nodes that are being simultaneously processed by one or more processor. Some nodes represent properties or actions of the same object or agent. However, a plurality of the nodes is ambiguous when it is not known for certain which nodes are associated with the same real-world entities as other nodes.

The algorithms described herein can be used to disambiguate data in social networks (e.g., Facebook, Twitter, e-commerce-based systems, and telecommunication networks) as well as to disambiguate video data in cameras. Within social networks, the data about who is calling whom, who is logging onto which websites, and who is moving money between bank accounts can be used to distinguish users of the social networks. Such social network information is useful in criminal investigations and for advertisers.

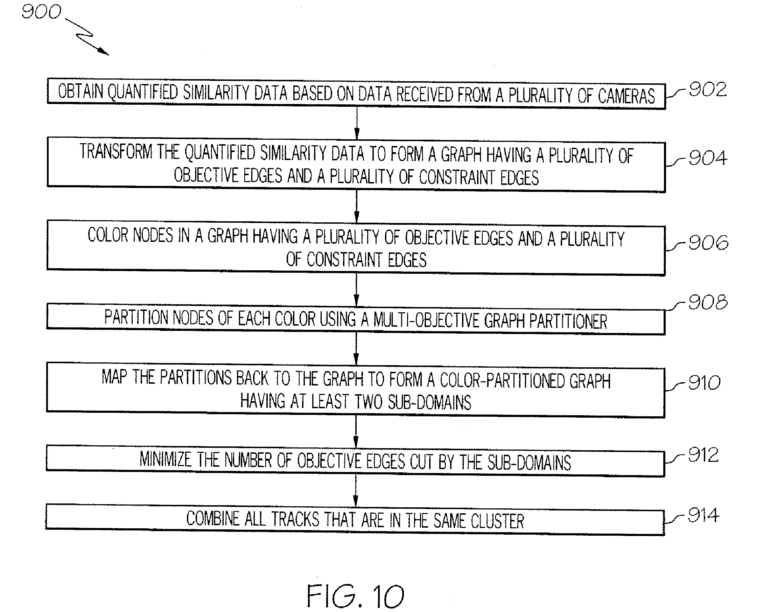

Figure 10 is a flow diagram of an embodiment of a method 900 to extend the lifespan of a track of a moving object to overcome spatial non-locality and temporal non-locality in accordance with the present invention. Method 900 is described with reference to the tracking system 10 of Figures 1A-1C and exemplary embodiments of graphs shown in Figures 2A-9 although it is to be understood that method 900 can be implemented using other embodiments of tracking system and cameras as is understandable by one skilled in the art who reads this document. A program-product including a non-transitory processor-readable medium (storage medium 80) on which program instructions (software 81) are embodied is executed by at least one processor 45 so that the program instructions are operable to perform the operations described in method 900.

At block 902, the processor 45 obtains quantified similarity data based on data received from a plurality of cameras 20(1-N). In one implementation of this embodiment, a processor external to the tracking system 10 obtains raw image data from the cameras 20(1-N) and creates and quantifies the similarity data, which is then sent to the processor 45 in the tracking system 10. Similarly data can be obtained by detecting corresponding features in multiple images and quantified by computing metrics based on the relative properties of the features (e.g., color, length, width, etc) as is understand in the art. In another implementation of this embodiment, the processor 45 obtains raw image data from the cameras 20(1-N) and creates and quantifies the similarity data.

At block 904, the processor 45 executes software 81 to transform the quantified similarity data along with temporal, spatial, and other data to form a graph having a plurality of objective edges and a plurality of constraint edges. A rules-based method can be used to perform this transformation. Other methods as possible. As described above, the processor 45 optimizes the generation of objective edges based on a similarity quantification of the data; optimizes the generation of objective edges and the generation of constraint edges based on at least one of spatial location of a plurality of cameras, and a position of the object within a view of at least one of the plurality of cameras; and optimizes generation of constraint edges based on temporal gaps in the track lifespans.

At block 906, the processor 45 colors the nodes in the graph with at least two colors to form a colored graph. First, the processor 45 constructs a constraint-edge graph with the full subset of nodes but with only the constraint edges and none of the objective edges. Then the constraint-edge graph 99 is colored so that the constraint edges only connect nodes of different colors.

At block 908, the processor 45 partitions nodes of each color using a multi-objective graph partitioner (e.g., software 81). All the nodes within the same partition (also referred to herein as "sub-domain") are of the same color, and thus, do not include any constraint edges. To perform the partitioning, the processor 45 computes all disconnected sub-domains and then may further partition the computed sub-domains using a multi-objective graph partitioner. For example, sub-domains 30-1, 30-2 and 30-3 are formed in the sub-graph 85 (Figure 5), sub-domains 35-1 and 35-2 are formed in the sub-graph 86 (Figure 6), and sub-domain 40-1 is formed in the subgraph 87 (Figure 7).

At block 910, the processor 45 maps the partitions (the set of all sub-domains) back to the graph to form a color-partitioned graph having at least two sub-domains. The objective-edges and the constraint-edges are all included in the color-partitioned graph. For example, the objective-edges 50(1-9) and the constraint-edges 60(1-5) in graph 100 (Figure 3) are all included in the color-partitioned graph 98 (Figure 8).

At block 912, the processor 45 minimizes the number of objective edges cut by the sub-domains. In one implementation of this embodiment, the processor 45 provides objective-edge weights for respective associated objective edges, and minimizes the objective-edge weights cut by the sub-domains by iteratively computing the set of boundary nodes that will optimize the objective function if moved to an adjacent sub-domain while ensuring that all the constraints are satisfied. All the constraints are satisfied when all constraint edges are cut by the partitioning.

At block 914, the processor 45 cross-associates all data that are part of the same cluster by combining all the tracks that are associated with the nodes of the same sub-domain for all sub-domains that have more than one node.

In this manner, a program product for clustering multi-modal data including hard and soft cross-mode constraints is executed by a processor to extend the lifespan of a track of a moving object. This track is extended despite spatial non-locality and temporal non-locality of the received data.

In another embodiment, the coloring is used as the initial partitioning and there is no further sub-partitioning of the nodes of each given color. In this alternative case, Figure 5 would include a single sub-domain (not shown) that encompasses the three sub-domains 30-1, 30-2, and 30-3 (e.g., encompasses all the nodes 101, 102, 104, 105, and 107 of the first color) in sub-graph 85. Likewise, Figure 6 would include a single sub-domain (not shown) that encompasses the two sub-domains 35-1 and 35-2 (e.g., encompasses both the nodes 103 and 108 of the second color) in graph 86. Likewise, Figure 7 would include a single sub-domain 40-1 (e.g., encompasses the node 106 of the third color) in sub-graph 87. This alternative approach is faster than the above described method 900 and does not require a multi-objective graph partitioner. However, in general, this alternative method results in color-partitioned graph with larger clusters. The nodes of these larger clusters may be disconnected (as is node 107 in Figure 5). Or the nodes of these larger clusters may be connected only by a single or small number of edges (as is node 105 in Figure 5). So typically, this approach results in lower-quality clusters. This alternative embodiment thus requires a final optimization of the clustering of the color-partitioned graph by a greedy algorithm.

Although specific embodiments have been illustrated and described herein, it will be appreciated by those skilled in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. A program product for clustering multi-modal data including hard and soft cross-mode constraints, the program-product comprising a non-transitory processor-readable medium (80) on which program instructions are embodied, wherein the program instructions are operable, when executed by at least one processor (45), to:
color nodes (101) in a graph having a plurality of objective edges (50) and a plurality of constraint edges (60), wherein at least two colors are used to color the nodes, and wherein the plurality of constraint edges connects a respective plurality of node pairs (101/103), the two nodes in the node pairs being different colors;
partition the nodes by color, wherein the partitioned nodes of the same color are independent of constraint edges;
map the partitions (30-1) back to the graph to form a color-partitioned graph (98) having at least two sub-domains (31-1); and
cross-associate all data that are part of a cluster.

2. The program product of claim 1, wherein the program instructions are further operable, when executed by the at least one processor (45), to optimize the partitioning with respect to an optimization function while ensuring that all constraint edges (60) are cut by the partitioning by performing at least one of:
swap border nodes (103) bordering on two sub-domains (36-1);
merge at least two sub-domains (40-1); and
split at least one sub-domain.

3. The program product of claim 1, wherein the program instructions are further operable, when executed by the at least one processor (45), to:
provide objective-edge weights for respective associated objective edges (50); and
minimize a function of the objective-edge weights cut by the sub-domains (30-1).

4. The program product of claim 1, wherein the program instructions are further operable, when executed by the at least one processor (45), to color the nodes (101) in the graph by using a Modified Welsh-Powell algorithm.

5. The program product of claim 1, wherein the program instructions are further operable, when executed by the at least one processor (45), to partition the nodes (101) by color using a multi-objective graph partitioner (81).

6. The program product of claim 1, wherein the program instructions are further operable, when executed by the at least one processor (45), to optimize data received from a plurality of cameras (20).

7. The program product of claim 6, wherein the program instructions to optimize the data received from the plurality of cameras (20) are further operable, when executed by the at least one processor (45), to:
optimize generation of the plurality of objective edges (50) based on a similarity quantification of the data;
optimize generation of the plurality of objective edges and generation of the plurality of constraint edges (60) based on at least one of spatial location of the plurality of cameras, and a position of an object within a field-of-view of at least one of the plurality of cameras; and
optimize generation of the plurality of constraint edges based on temporal gaps in track lifespans.

8. The program product of claim 1, wherein the program instructions are further operable, when executed by the at least one processor (45), to generate the plurality of objective edges (60) for the nodes (101) in the graph (100), the plurality of objective edges being based on a quantified similarity of the data; a
spatial location and position within a field-of-view of at least one of the plurality of cameras (20); temporal gaps in the cluster; and social network data.

9. The program product of claim 1, wherein the program instructions are further operable, when executed by the at least one processor (45), to generate the plurality of constraint edges (60) for the nodes (101) in the graph (100), the plurality of constraint edges being based on at least one of: temporal overlap within a camera (20); temporal overlap across cameras having across non-overlapping field-of-views; temporal locality constraints; temporal constraints on dynamic tracks; spatial constraints; constraints derived from social network data; constraints derived from financial data; and constraints derived from other modes of data.

10. A method to extend the lifespan of a track of a moving object (25) to overcome spatial non-locality and temporal non-locality by:
obtaining quantified similarity data based on data received from a plurality of cameras (20);
transforming the quantified similarity data to form a graph (100) having a plurality of objective edges (50) and a plurality of constraint edges (60);
coloring nodes (101) in the graph, wherein at least two colors are used to color the nodes, and wherein the plurality of constraint edges connect a respective plurality of node pairs, the two nodes in the node pairs being different colors;
partitioning the nodes by color, wherein the partitioned nodes of the same color are independent of the plurality of constraint edges; and
mapping the partitions back to the graph to form a color-partitioned graph (98) having at least two sub-domains (30-1).
